# EUROPEAN PATENT APPLICATION

(11) **EP 3 012 464 A1**
(43) Date of publication of application: **27.04.2016**
(21) Application number: 15189917.6
(22) Date of filing: 15.10.2015
(51) Int. Cl.: F15B 13/06

(54) **OPERATING CABINET FOR A COMBINE HARVESTER AND MULTIPLE HYDRAULIC OPERATION LEVER THEREFOR**

(30) Priority: 20.10.2014 CN 201420607199 U
(71) Applicant: CLAAS Jinyee Agriculture Machinery (Shandong) Co. Ltd, Gaomil/Shandong 261500 (CN)
(72) Inventor: Bühlmeier, Robert, 33442 Herzebrock-Clarholz (DE); Zhang, Jianmin, Gaomi, Shandong Province (CN); X, Minji, Gaomi, Shandong Province (CN); Zang, Xi, Qingdao City, Shandong Province (CN)
(74) Representative: Budach, Steffen

(57) **Abstract**

The present utility model relates to a multiple hydraulic operation lever adapted for an operating cabinet of a combine harvester, the multiple hydraulic operation lever having a mechanically actuating part and a hydraulically actuating part which is activatable in line with the mechanically actuating part, wherein the mechanically actuating part comprises an actuating rod which is movable between different shift positions, the hydraulically actuating part comprises a multi-way hydraulic rotary valve which is provided to communicate fluidly with at least two hydraulically actuating members of the combine harvester, the multi-way hydraulic rotary valve comprises a pump port, a tank port and hydraulic ports communicating fluidly with the hydraulically actuating members, the hydraulic ports are provided in such a way that they correspond to the shift positions, depending on the shift positions where the actuating rod occupies, the multi-way hydraulic rotary valve is selectively changed in different operating states where hydraulic fluid is able to be supplied via the pump port into a respective hydraulically actuating member to drive it, the hydraulic fluid is able to be held in the respective hydraulically actuating member or the hydraulic fluid is able to be returned from the respective hydraulically actuating member to the tank port. The utility model also relates to an operating cabinet having said operation lever and a combine harvester having said operating cabinet.

## Description

### Field of the Utility Model

The present utility model generally relates to a multiple operation lever, especially a multiple hydraulic operation lever, for a combine harvester and an operating cabinet for the combine harvester equipped with said multiple operation lever.

### Background

With the development of technology and society, modem agricultural production apparatuses are increasingly used in agricultural production. A combine harvest is an important agricultural production apparatus which is used to harvest crops such as wheats and is able to reap the crops and carry out preliminary treatments of threshing, separating stems, removing wastes or the like.

Hydraulic power is usually used to drive respective operating members of the combine harvester to move. For example, the combine harvester may comprise a platform header, a travelling and speed-shifting mechanism, a reel, a grain discharging barrel and the like which are driven by hydraulic liquid to carry out their respective operations.

An operating cabinet is installed in a cab of the combine harvester. Conventionally, the operating cabinet is mounted with a plurality of operation levers to control the above mentioned operating members such as the platform header, the travelling and speed-shifting mechanism, the reel, the grain discharging barrel and the like. Because these operation levers are distributed on the operating cabinet, which makes it look disordered. Meanwhile, because the operation levers occupy the most available area of the operating cabinet, only less available area of the operating cabinet is left for other switches, cup holders, storage trays or the like.

Furthermore, during operation, an operator of the combine harvester may inadvertently contact unnecessary operation levers so as to cause the respective operating members to be damaged or even lead to agricultural production accidents. For example, in case that it is necessary to operate the grain discharging barrel, if the operator inadvertently contacts the operation lever for the travelling and speed-shifting mechanism, the grain discharging barrel will not be moved into a desired state and the combine harvester will suddenly change its speed due to operation of the travelling and speed-shifting mechanism, which may affect normal operation of other cooperating apparatuses.

Furthermore, with respect to conventional combine harvesters, it is necessary for a beginning driver, when being trained first, to keep in mind various functions of the operation levers, which may increase operational complexity of the combine harvester and training difficulties and even affect marketing promotion of the combine harvester.

### Summary of the Utility Model

With respect to problems mentioned above, the present utility model is aimed at proposing a multiple hydraulic operation lever for a combine harvester, by which a plurality of hydraulically operating members can be controlled in the combine harvester without providing a single hydraulic operation lever for each hydraulically operating member, such that an operating cabinet of the combine harvester looks neat, training difficulties are reduced and thus misoperation caused by inadvertently contacting is inhibited.

According to one aspect of the present utility model, a multiple hydraulic operation lever adapted for an operating cabinet of a combine harvester is proposed, wherein the multiple hydraulic operation lever has a mechanically actuating part and a hydraulically actuating part which is activatable in line with the mechanically actuating part, wherein the mechanically actuating part comprises an actuating rod which is movable between different shift positions, the hydraulically actuating part comprises a multi-way hydraulic rotary valve which is provided to communicate fluidly with at least two hydraulically actuating members of the combine harvester, the multi-way hydraulic rotary valve comprises a pump port, a tank port and hydraulic ports communicating fluidly with the hydraulically actuating members, the hydraulic ports are provided in such a way that they correspond to the shift positions, depending on the shift positions which the actuating rod occupies, the multi-way hydraulic rotary valve is selectively changed in different operating states where hydraulic fluid is able to be supplied via the pump port into a respective hydraulically actuating member to drive it, the hydraulic fluid is able to be held in the respective hydraulically actuating member and the hydraulic fluid is able to be returned from the respective hydraulically actuating member to the tank port.

Optionally, the multi-way hydraulic rotary valve is provided to communicate fluidly with a platform header, a travelling and speed-shifting mechanism, a reel and a grain discharging barrel of the combine harvester.

Optionally, the multiple hydraulic operation lever comprises a housing on which a slide block is provided in such a way that it is slidable back and forth, the multi-way hydraulic rotary valve comprises a driving rod which is connected rigidly to the actuating rod, the actuating rod, when the actuating rod enters a respective shift position, is pivoted about the slide block such that the actuating rod is activated to drive the multi-way hydraulic rotary valve selectively into the different operating states.

Optionally, the hydraulic ports of the multi-way hydraulic rotary valve comprise six hydraulic ports, each of the platform header and the reel is assigned with one hydraulic port, and each of the travelling and speed-shifting mechanism and the grain discharging barrel is assigned with two hydraulic ports.

Optionally, the multiple hydraulic operation lever comprises a housing on which a slide block is provided in such a way that it is slidable back and forth, the multi-way hydraulic rotary valve comprises a driving rod which is connected rigidly to the actuating rod, the actuating rod, when the actuating rod enters a respective shift position, is pivoted about the slide block such that the actuating rod is activated to drive the multi-way hydraulic rotary valve selectively into the different operating states.

Optionally, a reset spring is provided in the housing so as to provide force for resetting the actuating rod from a respective shift position.

Optionally, a connecting rod and a bracket are mounted in the housing, the actuating rod, the connecting rod and the bracket are connected rigidly to each other, the actuating rod is connected pivotally to the slide block via the bracket, and the actuating rod is connected rigidly to the driving rod via the connecting rod.

Optionally, the driving rod is rotatable about its own center axis when the actuating rod is moved between the different shift positions.

According to another aspect of the present utility model, an operating cabinet for a combine harvester is proposed, wherein the operating cabinet is mounted with a single multiply hydraulic operation lever as mentioned above, by which multiply hydraulic operation lever at least two hydraulically actuating members of the combine harvester are controllable.

According to another aspect of the present utility model, a combine harvester is proposed, wherein it has at least two hydraulically actuating members and an operating cabinet as mentioned above which is adapted to control the hydraulically actuating members.

### Brief Description of the Drawings

The foregoing and other aspects of the present utility model would be understood fully by the following detailed explanation in combination with the drawings. It should be noted that although the drawings are prepared in different scales for illustrative purposes, they do not affect interpretation of the present utility model. In the drawings:
Fig. 1 is a perspective view schematically showing an operating cabinet according to the present utility model adopted in a cab of a combine harvester, wherein the operating cabinet is equipped with a multiple hydraulic operation lever according to the present utility model;
Fig. 2 is a perspective view schematically showing the multiple hydraulic operation lever according to the present utility model;
Fig. 3 is a part sectioned view schematically showing the multiple hydraulic operation lever according to the present utility model;
Fig. 4 is a top view schematically showing the multiple hydraulic operation lever according to the present utility model;
Fig. 5 is a perspective view schematically showing a multi-way hydraulic valve adopted in the multiple hydraulic operation lever according to the present utility model; and
Fig. 6 is a hydraulic circuit of the multi-way hydraulic valve according to one embodiment of the present utility model.

### Detailed Description of the Utility Model

In all the drawings of the present application, the same reference numerals are used to represent those features configured in the same way or having a similar function.

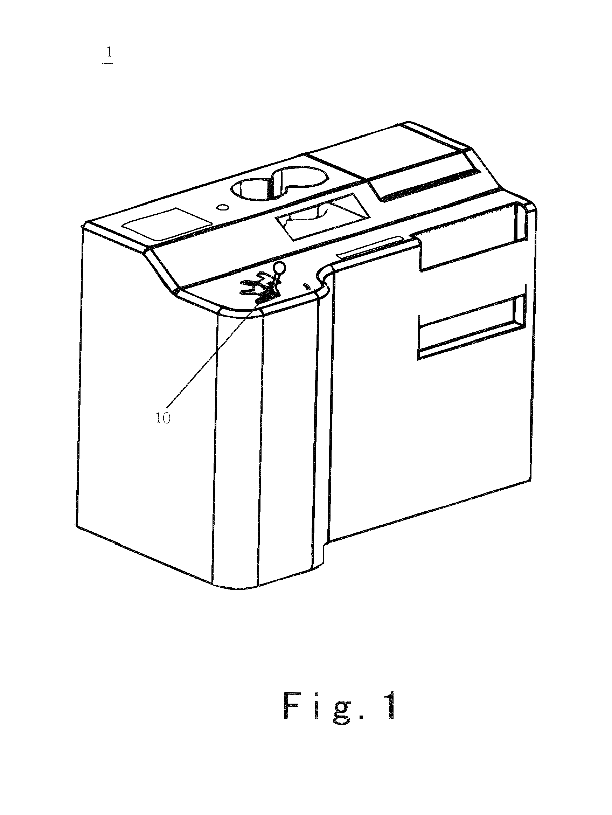

Fig. 1 shows an operating cabinet 1 adopted in a cab of a combine harvester according to the present utility model. It can be seen that a single hydraulic operation lever 10 is provided in the operating cabinet 1. Here, the hydraulic operation lever 10 is a hydraulic operation lever according to the present utility model which is used to control a plurality of hydraulically operating members of the combine harvester.

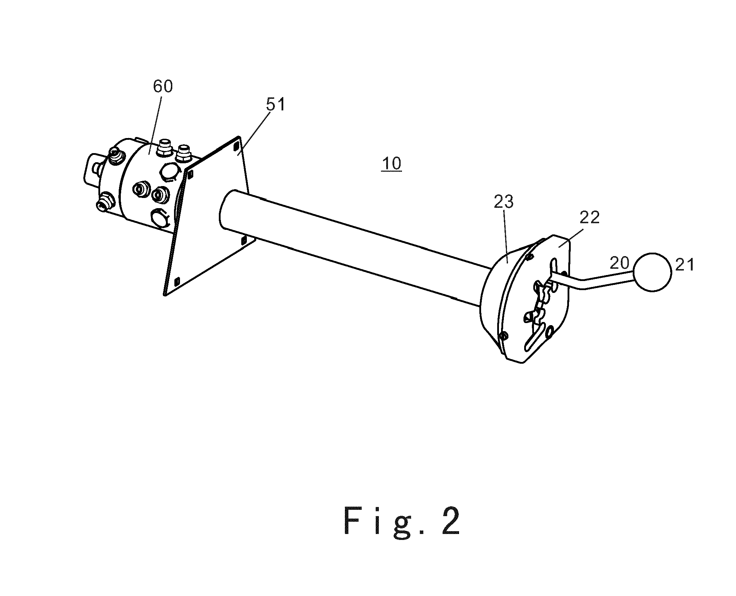

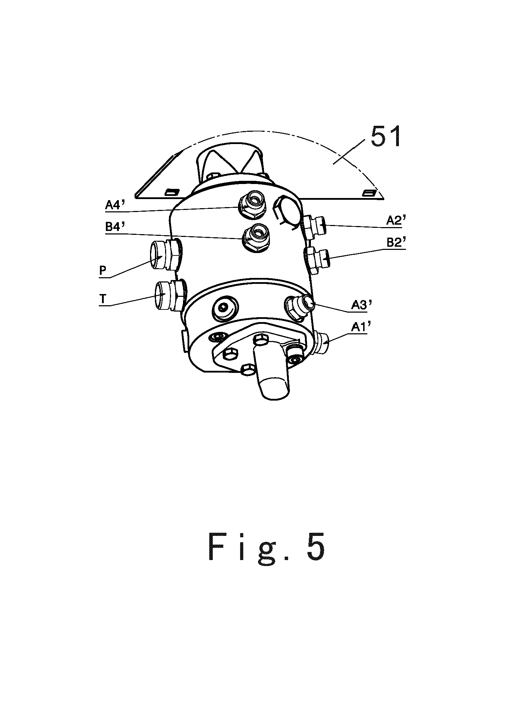

One embodiment of the multiple hydraulic operation lever 10 according to the present utility model will be explained with respect to Figs. 2 to 6 below.

Fig. 2 is a schematic perspective view of the multiple hydraulic operation lever 10. For example, the multiple hydraulic operation lever 10 may be used to control hydraulically actuating elements for a platform header, a travelling and speed-shifting mechanism, a reel, a grain discharging barrel, etc. of the combine harvester in such a way that they are able to work as desired.

For illustrative purposes only, the hydraulic operation lever 10 according to the present utility model will be explained with respect to the platform header, the travelling and speed-shifting mechanism, the reel and the grain discharging barrel of the combine harvester. It is understood by a person skilled in the art that in the scope of the present utility model the multiple hydraulic operation lever 10 may be modified to control all hydraulically actuating members of the combine harvester. Alternatively, the multiple hydraulic operation lever 10 may be provided to control at least two of the platform header, the travelling and speed-shifting mechanism, the reel and the grain discharging barrel.

The multiple hydraulic operation lever 10 generally comprises a mechanically actuating part and a hydraulically actuating part. The mechanically actuating part of the multiple hydraulic operation lever 10 may be controlled directly and manually by an operator. The hydraulically actuating part may be connected via corresponding fluid lines to the hydraulically actuating elements for the platform header, the travelling and speed-shifting mechanism, the reel, the grain discharging barrel, etc. of the combine harvester such that the hydraulically actuating elements can be controlled hydraulically by actuation of the mechanically actuating part.

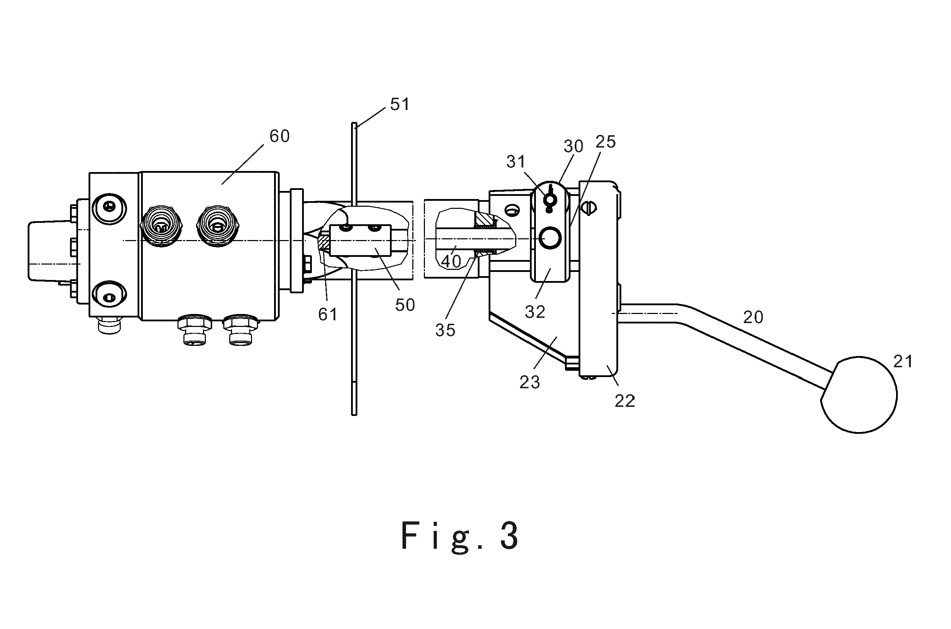

As shown in Figs. 2 and 3, the mechanically actuating part of the multiple hydraulic operation lever 10 comprises an actuating rod 20. The actuating rod 20 projects from a panel 22 in a folded manner and is provided on its exposed end with a ball head 21 which may be grasped by the operator. After the multiple hydraulic operation lever 10 is mounted in place, the panel 22 will be flush with a corresponding panel part of the operating cabinet 1.

The mechanically actuating part of the multiple hydraulic operation lever 10 further comprises a hollow housing 23 which is secured to the panel 22. A movable connecting rod 40 is provided in the interior of the housing 23. The connecting rod 40 is connected rigidly to the actuating rod 20 via a bracket 32. That is, the movement of the actuating rod 20 will directly drive the connecting rod 40 to move correspondingly.

An arc-shaped slot 24 is opened in the panel 22 of the hydraulic operation lever 10 such that the actuating rod 20 is movable back and forth in the slot 24. A plurality of branched slots A1, A2, A3, A4, B2 and B4 are also opened in the panel 22 such that these branched slots are provided to communicate radially with the slot 24. If necessary, the actuating rod 20 can be moved into these branched slots A1, A2, A3, A4, B2 and B4 respectively. These branched slots A1, A2, A3, A4, B2 and B4 represent different shift position of the hydraulically actuating lever 10. In case that the actuating rod 20 is not moved by the operator, it remains in the arc-shaped slot 24. Only when the actuating rod 20 is moved radially by the operator, it can enter the respective shift position A1, A2, A3, A4, B2 or B4. Further, a reset spring is arranged for the shift positions so as to generate reset force enabling the actuating rod 20 to return back into the arc-shaped slot 24.

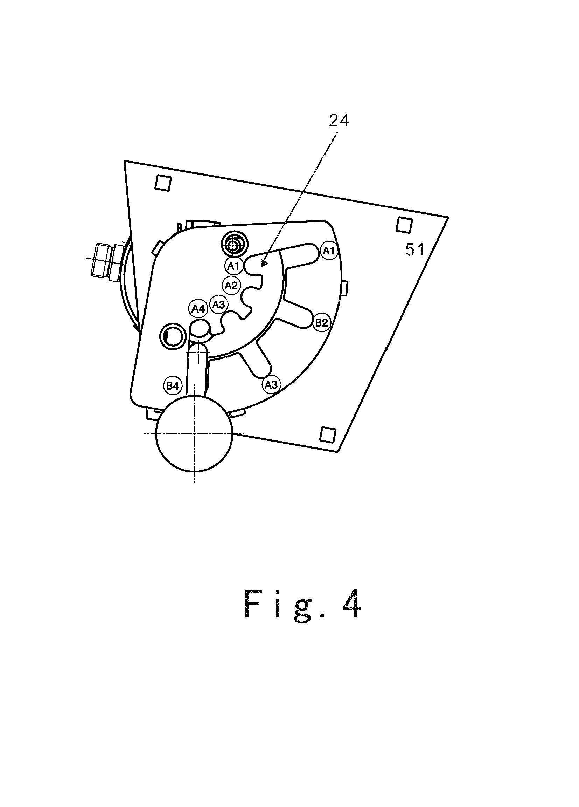

An arcuate guiding slot 25 (hidden in Figs. 2 and 4 and visible in Fig 3 only) is provided in an outer wall of the housing 23 of the hydraulic operation lever 10. A ball body 30 is guided slidably in the arcuate guiding slot 25. The ball body 30 is slidable in the arcuate guiding slot 25 in association with movement of the actuating rod 20 in the arc-shaped slot 24.

The ball body 30 is connected to the bracket 32 via a pivotal pin 31 such that the bracket 32 can be pivoted about the pivotal pin 31. The interior space of the housing 23 is designed in such a way that the bracket 23, the connecting rod 40 and the actuating rod 20 can be pivoted sufficiently. The arcuate guiding slot 25 is designed such that it corresponds to the arc-shaped slot 24. In this way, for example, after the actuating rod 20 is moved in the arc-shaped slot 24 between the shift positions A4 and B4 as shown in Fig. 4, the bracket 32 and thus the connecting rod 40 can be driven to pivot (for example, downwards and upwards in Fig. 3) about the ball body 30, especially the pivotal pin 31 by moving the actuating rod into the shift position A4 or B4.

Preferably, the multiple hydraulic operation lever 10 may be provided such that when the actuating rod 20 is being moved in the arc-shaped slot 24 the connecting rod 40 is rotated about its own central axis without pivoting about the pivotal pin 31. In this way, only when the connecting rod 40 is in a given circumferential position, it can be pivoted about the pivotal pin 31.

For example, in Fig. 3, the reset spring is represented by a spring seat 35 which provides reset force for resetting the connecting rod 40 from the respect shift position.

The housing 23 is provided with a securing plate 51 for mounting on the operating cabinet 1. The hydraulically actuating part of the multiple hydraulic operation lever 10 is disposed behind the securing plate 51. The hydraulically actuating part comprises a multi-way hydraulic valve 60. The multi-way hydraulic valve 60 comprises a plurality of hydraulic ports A1', A2', A3', A4', B2' and B4', a pump port (also called as a hydraulic fluid feeding port) P as well as a tank port T (also called as a hydraulic fluid returning port). The pump port P is provided to communicate fluidly with a hydraulic oil pump (not shown). The tank port T is provided to communicate fluidly with an oil tank (not shown). Furthermore, the multi-way hydraulic valve 60 comprises a driving rod 61. By action of the driving rod 61 in different circumferential positions, the hydraulic valve 60 may be changed into different operating positions in which these A1', A2', A3', A4', B2' and B4' can be switched on or off selectively.

As shown in Fig. 3, both the driving rod 61 of the hydraulic lever 60 and the connecting rod 40 are inserted in a sleeve 50 such that they are connected rigidly to each other via screws. Therefore, the movement of the connecting rod 40 can be transferred directly onto the driving rod 61 of the hydraulic valve 60. Therefore, the shift positions A1, A2, A3, A4, B2 and B4 of the multiple hydraulic operation lever 10 of the present utility model can be provided in such a way that they correspond to the operating positions of the hydraulic valve 60. In this way, when the actuating rod 20 is in one shift position, the hydraulic valve 60 may be in a respective operating position such that the hydraulic ports A1', A2', A3', A4', B2' or B4' may be switched on or off selectively.

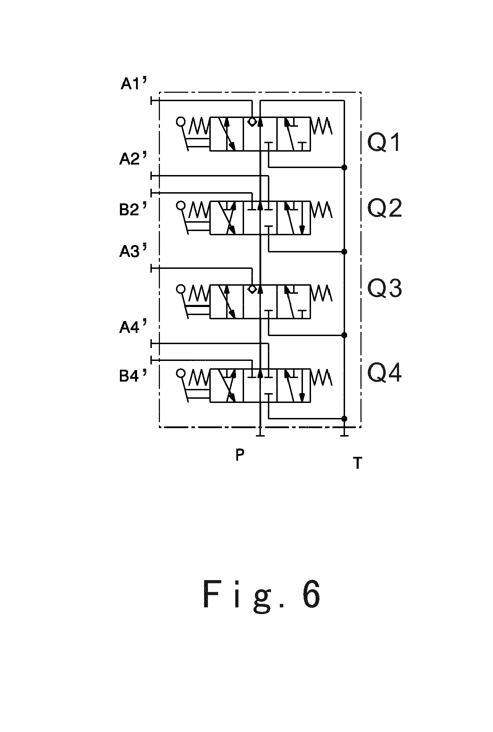

Fig. 6 shows a hydraulic circuit of the multi-way hydraulic valve 60. It can be seen from the hydraulic circuit that the hydraulic valve 60 generally comprises four hydraulic valve sections Q1, Q2, Q3 and Q4, wherein the hydraulic valve sections Q1 and Q3 are configured similarly so as to provide unidirectional hydraulic control for hydraulic cylinders of the platform header and the reel, and the hydraulic valve sections Q2 and Q4 are configured similarly so as to provide bidirectional hydraulic control for hydraulic cylinders of the travelling and speed-shifting mechanism and the grain discharging barrel. For example, the section Q1 of the hydraulic valve 60 comprises the hydraulic port A1' which may be provided to communicate fluidly with the hydraulic cylinder of the platform header, and the section Q3 of the hydraulic valve 60 comprises the hydraulic port A3' which may be provided to communicate fluidly with the hydraulic cylinder of the reel. For instance, the section Q2 of the hydraulic valve 60 comprises the hydraulic ports A2' and B2' which may be provided to communicate fluidly with the hydraulic cylinder of the travelling and speed-shifting mechanism, and the section Q4 of the hydraulic valve 60 comprises the hydraulic ports A4' and B4' which may be provided to communicate fluidly with the hydraulic cylinder of the grain discharging barrel.

The unidirectional operation of the hydraulic valve section Q1 after the hydraulic oil pump being activated will be explained as one example. In the present utility model, the hydraulic valve section Q1 may be regarded simply as a 3-position 4-way valve having a common port, like each section, selectively connecting in series with the pump port P. The port A1' of the 3-position 4-way valve is provided to communicate fluidly with a respective port of the hydraulic cylinder of the platform header. When the actuating rod 20 is moved in the arc-shaped slot 24 at a position where the rod is opposite both the shift positions A1 and A1 as shown in Fig. 4, the 3-position 4-way valve is in a middle position illustrated in Fig. 6. At this moment, the port A1' is connected to a check valve of the section Q1 such that no hydraulic fluid can be supplied into the port A1' to drive the hydraulic cylinder of the platform header. When it is necessary to raise the platform header, the actuating rod 20 is pushed into one shift position A1 (for example into the left branched slot A1 illustrated in Fig. 4). Therefore, the 3-position 4-way valve may be moved into a right position illustrated in Fig. 6 such that the hydraulic fluid may be supplied via the pump port P into the port A1' to drive the hydraulic cylinder of the platform header and thus raise it. Then, under action of the reset spring, the 3-position 4-way valve is returned to its middle position and the platform header is held by the check vale in a raised state. When it is necessary to lower the platform header, the actuating rod 20 is pushed into the other shift position A1 (for example into the right branched slot A1 illustrated in Fig. 4). Therefore, the 3-position 4-way valve may be moved into a left position illustrated in Fig. 6 such that the hydraulic fluid can be returned via the tank port T into the oil tank so as to lower the platform header.

Then, the bidirectional operation of the hydraulic valve section Q4 after the hydraulic oil pump being activated will be explained as one example. In the present utility model, the hydraulic valve section Q4 may be simply regarded as a 3-position 5-way valve having a common port, like each section, selectively connecting in series with the pump port P. The ports A4' and B4' of the hydraulic valve section Q4 are provided to communicate fluidly with two ports of the hydraulic cylinder of the gain discharging barrel respectively. When the hydraulic fluid is supplied into the two ports of the hydraulic cylinder respectively, the hydraulic cylinder can be driven to move in two different directions. After the actuating rod 20 is moved in the arc-shaped slot 24 at a position where the rod is opposite both the shift positions A4 and B4 as shown in Fig. 4, the 3-position 5-way valve is in a middle position illustrated in Fig. 6 in which no hydraulic liquid is supplied to each of the ports A4' and B4'. When it is necessary to move the grain discharging barrel in one of the directions, the actuating rod 20 is pushed into the shift position A4 (for example into the upper branched slot A4 illustrated in Fig. 4). At this moment, the 3-position 5-way valve is moved into a left position illustrated in Fig. 6 such that the hydraulic fluid is supplied via the pump port P into the port A4' to drive the hydraulic cylinder of the grain discharging barrel. When it is necessary to move the grain discharging barrel in an opposite direction, the actuating rod 20 is pushed into the shift position B4 (for example into the lower branched slot B4 illustrated in Fig. 4) in which the 3-position 5-way valve is in a left position illustrated in Fig. 6 such that one part of the hydraulic fluid is supplied via the pump port P into the port B4' to drive the hydraulic cylinder of the grain discharging barrel and the other part is returned via the part A4' into the oil tank.

Although the hydraulic circuit of the hydraulic valve according to the present utility model has been explained above, it is understood by the skilled person in the art that the number of the sections of the hydraulic valve can be modified depending on the number of the hydraulically actuating members adopted in the combine harvester and that the hydraulic valve section can also be modified in such a way that it is operable in an unidirectional or bidirectional manner as desired. Furthermore, the order of the sections Q1 to Q4 can also be modified if necessary. That is to say, the order of the shift positions can also be modified correspondingly.

In the illustrated embodiment, the hydraulic valve 60 of the multiple hydraulic operation lever 10 according to the present utility model is embodied in the form of a rotary valve. It is understood by the skilled person in the art that the hydraulic valve 60 may alternatively be redesigned in other suitable forms such as a slide valve and the like on the basis of the illustrated hydraulic circuit. Naturally, it is understood that the mechanically actuating part can also be modified by the skilled person in the art depending on the modification of the hydraulically actuating part.

Alternatively, it is appreciated that the actuating rod 20, the connecting rod 40 and the bracket 32 illustrated in Fig. 3 can be formed as an integral component. It is also appreciated that components such as the actuating rod 20, the connecting rod 40 and the bracket 32, etc. of the operation lever can be supported in the housing 23 by all known means which would not be explained here. Alternatively, the slot 24 and the guiding slot 25 can be provided such that they are substantially straight. In this case, each branched slot may be provided such that it is substantially perpendicular to the straight slot 24.

Because the multi-way hydraulic valve 60 is adopted as the hydraulically actuating part of the multiple hydraulic operation lever 10 in the present utility model, only such a single operation lever 10 provided on the operating cabinet 1 of the combine harvester can be used to control all the hydraulically actuating members of the combine harvester, such that the combine harvester can be operated simply, training time of beginning drivers is shortened and the combine harvester may work more efficiently. Further, because no inadvertent contacting may occur to lead to damage of the operation lever as cited in the background part of the description, accident rate is reduced.

Furthermore, as shown in Fig. 1, because the single operation lever 10 is disposed integrally in the operating cabinet 1 according to the present utility model, the operating cabinet 1 looks neat and has more areas left for other functional elements such as switches, cup holders, storage trays or the like such that it facilitates designing the operating cabinet 1 flexibly.

Further, it should be understood by the skilled person in the art that the mechanically and hydraulically actuating parts of the multiple hydraulic operation lever 10 according to the present utility model can be embodied in all existing mechanical or hydraulic designs and are not limited by the embodiments which have been explained here. That is to say, in light of those contents, the skilled person in the art can make all suitable and beneficial alternatives, modifications and changes which are considered as belonging to the protection scope of the present utility model.

A list of reference numerals:
- 1: Operating cabinet
- 10: Multiple hydraulic operation lever
- 20: Actuating rod
- 21: Ball head
- 22: Panel
- 23: Housing
- 24: Arc-shaped slot
- 25: Arcuate guiding slot
- 30: Ball body
- 31: Pivotal pin

- 32: Bracket
- 35: Spring seat
- 40: Connecting rod
- 50: Sleeve
- 51: Securing plate
- 60: Multi-way hydraulic valve
- 61: Driving rod
- A1, A2, A3, A4, B2 and B4: Branched slot, shift position
- A1', A2', A3', A4', B2' and B4': Hydraulic port of the multi-way hydraulic valve
- Q1, Q2, Q3 and Q4: Valve section of the multi-way hydraulic valve
- P: Pump port or hydraulic fluid feeding port of the multi-way hydraulic valve
- T: Tank port or hydraulic fluid returning port of the multi-way hydraulic valve

## Claims

1. A multiple hydraulic operation lever adapted for an operating cabinet of a combine harvester, the multiple hydraulic operation lever having a mechanically actuating part and a hydraulically actuating part which is activatable in line with the mechanically actuating part, wherein the mechanically actuating part comprises an actuating rod which is movable between different shift positions, the hydraulically actuating part comprises a multi-way hydraulic rotary valve which is provided to communicate fluidly with at least two hydraulically actuating members of the combine harvester, the multi-way hydraulic rotary valve comprises a hydraulic fluid feeding port, a hydraulic fluid returning port and hydraulic ports communicating fluidly with the hydraulically actuating members, the hydraulic ports are provided in such a way that they correspond to the shift positions, depending on the shift positions which the actuating rod occupies, the multi-way hydraulic rotary valve is changed selectively in different operating states where hydraulic fluid is able to be supplied via the hydraulic fluid feeding port to a respective hydraulically actuating member to drive it, where the hydraulic fluid is able to be held in the respective hydraulically actuating member and where the hydraulic fluid is able to be returned from the respective hydraulically actuating member to the hydraulic fluid returning port.

2. The multiple hydraulic operation lever as claimed in claim 1, wherein the multi-way hydraulic rotary valve is provided to communicate fluidly with a platform header, a travelling and speed-shifting mechanism, a reel and a grain discharging barrel of the combine harvester.

3. The multiple hydraulic operation lever as claimed in claim 1 or 2, wherein the lever comprises a housing on which a slide block is provided in such a way that it is slidable back and forth, the multi-way hydraulic rotary valve comprises a driving rod which is connected rigidly to the actuating rod, the actuating rod, when the actuating rod enters a respective shift position, is pivoted about the slide block such that the actuating rod is activated to drive the multi-way hydraulic rotary valve into the different operating states selectively.

4. The multiple hydraulic operation lever as claimed in claim 2, wherein the hydraulic ports of the multi-way hydraulic rotary valve comprise six hydraulic ports, each of the platform header and the reel is assigned with one hydraulic port, and each of the travelling and speed-shifting mechanism and the grain discharging barrel is assigned with two hydraulic ports.

5. The multiple hydraulic operation lever as claimed in claim 4, wherein the lever comprises a housing on which a slide block is provided in such a way that it is slidable back and forth, the multi-way hydraulic rotary valve comprises a driving rod which is connected rigidly to the actuating rod, the actuating rod, when the actuating rod enters a respective shift position, is pivoted about the slide block such that the actuating rod is activated to drive the multi-way hydraulic rotary valve into the different operating states selectively.

6. The multiple hydraulic operation lever as claimed in claim 5, wherein a reset spring is provided in the housing so as to provide force for resetting the actuating rod from a respective shift position.

7. The multiple hydraulic operation lever as claimed in claim 5 or 6, wherein a connecting rod and a bracket are mounted in the housing, the actuating rod, the connecting rod and the bracket are connected rigidly to each other, the actuating rod is connected pivotally to the slide block via the bracket, and the actuating rod is connected rigidly to the driving rod via the connecting rod.

8. The multiple hydraulic operation lever as claimed in claim 7, wherein the driving rod is rotatable about its own center axis when the actuating rod is moved between the different shift positions.

9. An operating cabinet for a combine harvester, wherein the operating cabinet is mounted with a single multiply hydraulic operation lever as claimed in any one of claims 1 to 8, by which multiply hydraulic operation lever at least two hydraulically actuating members of the combine harvester are controllable.

10. A combine harvester, wherein it has at least two hydraulically actuating members and an operating cabinet as claimed in claim 9 which is adapted to control the hydraulically actuating members.
